(19) Europäisches Patentamt
European Patent Office
Office européen des brevets

(11) **EP 2 715 462 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **12719341.5**

(22) Anmeldetag: **27.04.2012**

(51) Int Cl.:
***G05B 19/042*** *(2006.01)*

(86) Internationale Anmeldenummer:
**PCT/EP2012/057827**

(87) Internationale Veröffentlichungsnummer:
**WO 2012/159850 (29.11.2012 Gazette 2012/48)**

(54) **VERFAHREN ZUM BETREIBEN EINES SICHERHEITSSTEUERGERÄTS**

METHOD FOR OPERATING A SAFETY CONTROL DEVICE

PROCÉDÉ POUR FAIRE FONCTIONNER UN APPAREIL DE COMMANDE DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2011 DE 102011102274**

(43) Veröffentlichungstag der Anmeldung:
**09.04.2014 Patentblatt 2014/15**

(73) Patentinhaber: **Pilz GmbH & Co. KG**
**73760 Ostfildern (DE)**

(72) Erfinder:
• **STEGMAIER, Simon**
**73760 Ostfildern (DE)**

• **NAWRATIL, Timo**
**73760 Ostfildern (DE)**
• **WUELLRICH, Juergen**
**73760 Ostfildern (DE)**

(74) Vertreter: **Witte, Weller & Partner Patentanwälte mbB**
**Postfach 10 54 62**
**70047 Stuttgart (DE)**

(56) Entgegenhaltungen:
**EP-A1- 1 591 849     WO-A1-2009/155993**

**Beschreibung**

Die Erfindung betrifft ein Verfahren zum Betreiben eines Sicherheitssteuergeräts.

Sicherheitssteuergeräte werden üblicherweise dazu eingesetzt, sicherheitskritische Bereiche in der Industrie zu überwachen und bei Vorliegen eines sicherheitskritischen Problems eine Gegenmaßnahme auszuführen. Typischerweise sind Sicherheitssteuergeräte einerseits mit Meldegeräten und andererseits mit Aktoren signaltechnisch verbunden. Häufig eingesetzte Meldegeräte für Sicherheitssteuergeräte sind Not-Aus-Taster, Schutztürschalter, Zweihandschalter, Lichtschranken und verschiedene Sensoren, die sicherheitsrelevante Signale einer überwachten Maschine oder Maschinenanlage liefern. Das Sicherheitssteuergerät überwacht dann sicherheitsrelevante Signale von den Meldegeräten und wertet diese aus. Anschließend erzeugt es in Abhängigkeit von der Auswertung Steuersignale zur Steuerung der Aktoren. Diese werden dann typischerweise derart gesteuert, dass sie einen sicheren Zustand der Anlage herbeiführen. Das kann beispielsweise durch ein fehlersicheres Abschalten der entsprechenden Anlage erfolgen. Alternativ oder zusätzlich können Warnsignale zur Sicherung der Anlage ausgegeben werden.

Zur Herstellung einer besonders sicheren Betriebsfähigkeit des Sicherheitssteuergeräts werden diese typischerweise mit redundanten Komponenten hergestellt. Beispielsweise besitzt das Sicherheitssteuergerät dann zwei oder mehr Berechnungseinheiten, die parallel die gleichen Aufgaben verrichten. Um die sichere Betriebsfähigkeit zu verbessern, werden die Komponenten sowie von den Komponenten verarbeitete Softwarekomponenten diversitär ausgelegt, wodurch interne systematische Fehler ausgeglichen werden können. Es kann hierzu beispielsweise vorgesehen sein, dass die Berechnungseinheiten von unterschiedlichen Herstellern stammen und unterschiedliche Architekturen aufweisen. Wesentlich ist, dass der Vergleich zweier oder mehrerer Ergebnisse aus den unterschiedlichen Berechnungseinheiten möglich ist, die auf unterschiedliche Weise aufgrund identischer Eingabedaten ermittelt wurden. Stimmen diese Ergebnisse nicht überein, so liegt ein sicherheitsrelevanter Fehler innerhalb des Sicherheitssteuergeräts vor. Eine Reaktion des Sicherheitssteuergeräts auf einen solchen Fehler kann durch Ausführen eines geeigneten Reaktionsschritts erfolgen. Beispielsweise kann ein Warnsignal ausgegeben und/oder eine Anlage abgeschaltet werden. Denkbar ist auch eine Übergabe von Steuerungsaufgaben auf ein sekundäres Sicherheitssteuergerät.

Weist das Sicherheitssteuergerät mehr als zwei redundante Komponenten auf, kann ein Mehrheitsbeschluss bei Vergleich der Ergebnisse erfolgen. Hierdurch wird erreicht, dass die Steueraufgabe fortgeführt werden kann, wenn in nur einer Komponente ein interner Fehler vorliegt. Stehen nur zwei Komponenten zur Verfügung, erfolgt in der Regel eine automatische Gegenmaßnahme. Als Folge ist meist ein manueller Eingriff an einer betreffenden Anlage durch einen Maschinenbetreiber erforderlich.

EP 1 591 849 A1 zeigt ein redundantes Automatisierungssystem bei dem neben einem Master- und einem Stand-by-Automatisierungsgerät ein rechnergestütztes Überwachungsgerät vorgesehen ist, mittels welchem ein VergleichsProzessabbild bezüglich einer Anzahl an Ausgangssignalen des Automatisierungssystems ermittelbar ist.

Eine Voraussetzung zur Realisierung redundant aufgebauter Sicherheitssteuergeräte ist eine Vergleichbarkeit von Berechnungsergebnissen zwischen den Komponenten. Um diese gewährleisten zu können werden in Sicherheitssteuergeräten ganzzahlige Berechnungen durchgeführt. Ganzzahlen sind in der digitalen Datenverarbeitung exakt repräsentierbar und ein Speicheraufwand bei der Verwendung von Ganzzahlen ist nur gering. Dies gilt ebenso für grundlegende Rechenarten, wie Addition, Subtraktion, Multiplikation und Ganzzahldivision, deren Ergebnisse wiederum eine Ganzzahl sein müssen. Ferner folgt die Ganzzahlarithmetik den grundlegenden Regeln der Algebra, wie beispielsweise dem Assoziativgesetz, dem Distributivgesetz und dem Kommutativgesetz. Daher sind Algorithmen, die ausschließlich auf Ganzzahlen operieren, gegenüber einer Vertauschung von Operatoren resistent und damit robust.

Nachteilig hierbei ist es, dass die Sicherheitssteuergeräte auf ganzzahlige Operationen begrenzt sind. Hieraus reduziert sich die Exaktheit der Ergebnisse, da Eingangssignale nur als Ganzzahlen repräsentierbar sind und somit in den meisten Fällen auf- oder abgerundet werden müssen.

Zur Verbesserung der Rechengenauigkeit ist es aus dem Bereich der Computertechnik bekannt, Gleitkommazahlen einzusetzen. Eine Gleitkommazahl (auch Gleitpunktzahl oder Fließkommazahl genannt) ist eine approximative Darstellung einer reellen Zahl. Der Gleitkommazahl steht die Festkommazahl gegenüber, welche aus der Computeralgebra bekannt ist. Bei einer Gleitkommazahl wird eine begrenzte Ziffernfolge gespeichert, die Mantisse, wobei an einer festgelegten Stelle das Komma angenommen wird. Diese Mantisse wird mit einem weiteren Ausdruck multipliziert, der aus einer Basis besteht und einen Exponenten aufweist. Der Wert der Basis ist typischerweise über eine Konvention vereinbart. Der Exponent gibt implizit die tatsächliche Stelle des Kommas an. Die Verwendung von Gleitkommazahlen dient dazu, dass sowohl sehr große als auch sehr kleine Zahlen einfach und mit geringem Speicheraufwand repräsentiert werden können. Dies wird dadurch erreicht, dass aufgrund des "getrennten" Kommas Skalierungen der Werte und erneute Berechnungen automatisch durchgeführt werden können. Die Verwendung der Gleitkommazahl erlaubt es, wesentlich genauere und komplexere Berechnungen durchzuführen, als dies mit Ganzzahlen möglich ist. Dabei wird ein Speicher einer Berechnungseinheit optimal ausgenutzt, so dass die größtmöglich erreichbare Genauigkeit gewährleistet wird.

Für Berechnungen mit Gleitkommazahlen ist eine spezielle Gleitkommaarithmetik aus der numerischen Mathematik bekannt. In dieser Gleitkommaarithmetik gelten die grundlegenden Regeln der Algebra teilweise nicht, da die Regeln der Algebra aufgrund einer Ausrichtung der Operanden am Komma und aufgrund einer begrenzten Länge von Gleitkommadatentypen verletzt werden können. Zur Verdeutlichung wird folgendes (vereinfachtes) Beispiel genannt:

Der Ausdruck 0.125 + 4.5 - 4.0 besteht aus Dezimalzahlen und soll mittels Gleitkommazahlen in einem Binärsystem berechnet werden. Der Ausdruck, und damit die aufgezeigten Dezimalzahlen, haben in dem Binärsystem eine endliche Darstellung: 0.001 + 100.1 - 100.0.

Stehen vier Bits zur Darstellung der Binärzahlen zur Verfügung, können alle Dezimalzahlen vollständig dargestellt werden. Bei Einsatz von Klammern ergibt sich folgende Berechnung:

$$(0.001 + 100.1) - 100.0 = 100.1 - 100.0 = 0.1$$

Werden die Klammern anderweitig gesetzt, ergibt sich jedoch folgende Berechnung mit einem anderen Ergebnis:

$$0.001 + (100.1 - 100.0) = 0.001 + 0.1 = 0.101$$

Wie dargestellt, führt die Wahl der Klammern zu unterschiedlichen Ergebnissen im Binärsystem, wohingegen die entsprechende Anwendung der Klammern auf den Ausdruck mit Dezimalzahlen keine Auswirkungen auf das Ergebnis hat.

Zudem kommt, dass viele Dezimalwerte als Binärwerte keine endliche Darstellung haben. Eine Speicherung in Datentypen endlicher Größe erfordert daher meist eine Rundung auf einen darstellbaren Wert. Zudem können Operationen wie Multiplikation und Division die Zahl der für die exakte Darstellung erforderlichen Stellen erhöhen. Wie häufig Rundungen erfolgen und welcher Rundungsfehler dabei entsteht, hängt im Wesentlichen von der Implementierung des Algorithmus ab, der die Gleitkommaarithmetik anwendet. Daraus folgt, dass bei redundanter Implementierung mit diversitären Hard- und Softwarekomponenten eine Vergleichbarkeit von den Berechnungsergebnissen nicht gewährleistet werden kann. Bei einer Automation unter Verwendung von Gleitkommazahlen bestünde daher die Möglichkeit, dass eine Steuerung anhand von Daten mit potentiell unbegrenzten Fehlern erfolgt. Eine sichere Automation ist auf diese Weise nicht möglich.

Denkbar wäre es, eine Vergleichbarkeit dadurch herbeizuführen, dass keine diversitäre Hardware oder Software eingesetzt wird oder die diversitäre Hardware und Software so aufeinander abgestimmt wird, dass exakt gleiche Rechenergebnisse erfolgen müssen. Exakt gleiche Rechenergebnisse bei diversitärer Hard- und Software sind jedoch nur dann zu erwarten, wenn Operationen in genau gleicher Reihenfolge, mit genau derselben Genauigkeit und mit denselben Rundungsverfahren, insbesondere in Bezug auf deren Zeitpunkt und Rundungsrichtung, ausgeführt werden. Jedoch können weder die Genauigkeit noch die Reihenfolge der Operationen zuverlässig bestimmt werden, da sich verfügbare Übersetzer und Berechnungseinheiten in diesen Aspekten deutlich voneinander unterscheiden. Ein entsprechendes Sicherheitssteuergerät müsste somit redundant mit identischen Hard- und Softwarekomponenten ausgestattet werden. Dies würde jedoch gegen Grundgedanken sicherer Automation verstoßen, da gerade durch diversitäre Hard- und Software eine sehr hohe Sicherheit erreicht wird.

Denkbar wäre es ebenfalls, dass Gleitkommazahlen durch Festkommazahlen ersetzt werden und somit eine Festkommaarithmetik angewendet werden kann. Die Festkommaarithmetik kann wiederum mit Ganzzahlarithmetik implementiert werden. Dies führt jedoch bei gleicher Genauigkeit zu einem sehr hohen Speicherbedarf, was unwirtschaftlich und unpraktikabel ist.

Zudem bleibt bei den genannten Ansätzen eine Genauigkeit des Berechnungsergebnisses verborgen, weshalb weiterhin eine Steuerung auf Basis potentiell beliebig fehlerhafter Daten durchgeführt werden würde. Der Hauptnachteil bei Einsatz von Gleitkommaarithmetik in der sicheren Automation wird daher nicht ausgeräumt.

Es ist daher eine Aufgabe der Erfindung, ein Verfahren zum Betreiben eines Sicherheitssteuergeräts bereitzustellen, das eine Genauigkeit der Sicherheitssteuergeräte erhöht und gleichzeitig die Sicherheit beibehält.

Diese Aufgabe wird gemäß einem Aspekt der Erfindung durch ein Verfahren der eingangs genannten Art gelöst, mit den Schritten:

- Bereitstellen einer Anzahl von Berechnungseinheiten,
- Erfassen eines Eingangssignals,
- Ermitteln eines Gleitkommawerts in Abhängigkeit des Eingangssignals,
- Bestimmen eines Eingangsintervalls in Abhängigkeit des Gleitkommawerts,
- Ermitteln einer Anzahl von Ergebnisintervallen, wobei mittels der Berechnungseinheiten jeweils ein Ergebnisintervall ermittelt wird, und wobei die Berechnungseinheiten dazu ausgebildet sind, jeweils mindestens eine erste Rechenvorschrift auf das Eingangsintervall anzuwenden, die eine Intervallarithmetik aufweist,

- Bestimmen eines Ausgangswerts in Abhängigkeit der Ergebnisintervalle, wenn ein Ausgabekriterium erfüllt ist,
- Bestimmen eines Ausgangssignals in Abhängigkeit des Ausgangswerts, und
- Ausgeben des Ausgangssignals.

Diese Aufgabe wird gemäß einem weiteren Aspekt der Erfindung durch ein Sicherheitssteuergerät mit einer Anzahl von Berechnungseinheiten gelöst, das dazu ausgebildet ist, ein Eingangssignal zu erfassen, einen Gleitkommawerts in Abhängigkeit des Eingangssignals zu ermitteln, ein Eingangsintervall in Abhängigkeit des Gleitkommawerts zu bestimmen, eine Anzahl von Ergebnisintervallen zu ermitteln, wobei mittels der Berechnungseinheiten jeweils ein Ergebnisintervall ermittelt wird, und wobei die Berechnungseinheiten dazu ausgebildet sind, jeweils mindestens eine erste Rechenvorschrift auf das Eingangsintervall anzuwenden, die eine Intervallarithmetik aufweist, einen Ausgangswert in Abhängigkeit der Ergebnisintervalle zu bestimmen, wenn ein Ausgabekriterium erfüllt ist, ein Ausgangssignal in Abhängigkeit des Ausgangswerts zu bestimmen, und das Ausgangssignal auszugeben.

Die Erfindung basiert damit auf der Idee, dass in den Berechnungseinheiten jeweils die erste Rechenvorschrift angewendet wird, die die Intervallarithmetik einsetzt. Es wird erreicht, dass ein Toleranzbereich zugelassen wird, in dem die Gleitkommawert sicher verarbeitet und anschließend verglichen werden können. Hierdurch wird eine Genauigkeit des Sicherheitssteuergeräts bei Durchführung der Rechenvorschrift erhöht, da Rundungsfehler betragsmäßig klein gehalten werden. Weiter wird die Genauigkeit beim Erfassen des Eingangssignals gegenüber ganzzahligen Operationen erhöht, da das Eingangssignal anstatt auf eine Ganzzahl auf den Gleitkommawert abgebildet werden kann. Zudem kann ein genaueres Ausgangssignal ausgegeben werden.

Die Berechnungseinheiten sind vorzugsweise als Mikrocontroller ausgebildet. In bevorzugten Ausgestaltungen werden in dem Sicherheitssteuergerät mehrere unterschiedliche Berechnungseinheiten von diversitärer Art eingesetzt. Sie können beispielsweise unterschiedlicher Bauart sein. Hieraus ergibt sich eine sehr hohe Sicherheit bei redundanter Verarbeitung des Eingangssignals und beim redundanten Ermitteln des Ausgangssignals.

Die Verwendung der Intervallarithmetik ermöglicht insbesondere, dass diversitäre Hard- und Software eingesetzt werden kann, da sie Intervalle als Ergebnis bestimmt. Die Ergebnisintervalle unterschiedlicher Berechnurigseinheiten können nunmehr miteinander verglichen werden, auch wenn sich die Ergebnisse der Berechnungseinheiten voneinander unterscheiden.

Intervallarithmetik ist eine Methode, die es ermöglicht mit Wertebereichen zu rechnen, anstatt mit einzelnen Zahlenwerten. Die eingangs genannte Problematik, dass Gleitkommazahlen mehrfach gerundet werden müssen, wird dadurch gelöst, dass anhand des Gleitkommawerts das Eingangsintervall gebildet wird, welches eine obere und eine untere Intervallgrenze besitzt. Zwischen den Intervallgrenzen liegt der exakte Wert des Gleitkommawerts. Die Intervallarithmetik stellt angepasste Rechenarten bereit, mit deren Hilfe sicher und genau mit den Eingangsintervallen gerechnet werden kann. Die dabei vorgenommenen Rundungen werden dadurch berücksichtigt, dass das Intervall in Abhängigkeit der Rundungen automatisch vergrößert oder verkleinert wird, sodass das Ergebnisintervall den exakten Ergebniswert beinhaltet. Unter der Intervallarithmetik werden somit Methoden verstanden, die Intervalle als Operanden einsetzen.

Geeignete Methoden sind beispielsweise aus den folgenden Dokumenten bekannt, auf die hier vollumfänglich Bezug genommen wird:

Comba, Joao L. D.; Stolfi, Jorge, Affine Arithmetic and Its Applications to Computer Graphics, Proc. SIBGRAPI '93, VI Brazilian Symposium on Computer Graphics and Image Processing, 1993;

De Figueiredo, Luiz Henrique; Stolfi; Jorge, Self-Validated Numerical Methods and Applications, Brazilian Mathematics Colloquium Monograph, IMPA, Rio de Janeiro, Brazil, 1997;

Hansen, Eldon R., A Generalized Interval Arithmetic, Proc. International Symposium on Interval Mathematics, London, 1975;

Neumaier, Arnold, Taylor Forms - Use and Limits, Reliable Computing, 9, 2002;

Sengupta, Atanu; Pal, Tapan Kumar; Theory and Methodology: On comparing interval numbers, European Journal of Operational Research, 127, 2000; und

Young, Rosalind Cecily, The Algebra of Many-Valued Quantities, Mathematische Annalen, Volume 4, Number 1, 1931.

Das Eingangssignal wird vorzugsweise von einem Meldegerät bezogen. Anhand des Eingangssignals wird der Gleitkommawert ermittelt. Dies kann beispielsweise durch einen A/D-Wandler erfolgen, wenn das Eingangssignal ein analoges Signal ist. Mittels des Gleitkommawerts wird dann ein Eingangsintervall bestimmt, das den Gleitkommawert beinhaltet. Die Breite des Intervalls kann auf unterschiedliche Art und Weise bestimmt werden, und damit die Werte für die obere und die untere Intervallgrenze. Der Gleitkommawert sollte dabei so eng wie möglich umschlossen werden, um eine hohe Exaktheit zu ermöglichen. Eine Möglichkeit ist es, eine feste Intervallbreite vorzugeben, die beispielsweise aus einem Speicher ausgelesen wird. Die Intervallbreite kann in bevorzugten Ausgestaltungen in Abhängigkeit von einem Toleranzwert des Eingangssignals ermittelt werden. Dieser Toleranzwert ergibt sich beispielsweise aus Messfehlern eines Sensors und/oder aus einer Genauigkeit des A/D-Wandlers.

In bevorzugten Ausgestaltungen werden mehrere Eingangssignale durch das Sicherheitssteuergerät erfasst und in entsprechender Weise weiterverarbeitet. Zudem ist es vorzugsweise vorgesehen, dass weitere benötigte Operanden, für die Berechnungseinheit ebenfalls auf ein Intervall abgebildet werden, wenn diese nicht exakt oder nur unter hohem Speicheraufwand exakt abbildbar sind. Derartige Operanden können beispielsweise notwendige Variablenwerte und Konstanten für die erste Rechenvorschrift sein.

In der Anzahl von Berechnungseinheiten wird mindestens die erste Rechenvorschrift auf das Eingangsintervall angewendet. Die erste Rechenvorschrift kann beispielsweise als Software aber auch in Form von Hardware implementiert werden. Die Rechenvorschrift weist vorzugsweise eine Anzahl von Rechenoperationen auf, die beispielsweise sequentiell abgearbeitet wird. Die Rechenvorschrift kann auch ein Teil einer übergeordneten Vorschrift sein, beispielsweise eine einzelne Programmroutine oder ein Programmmodul. Die erste Rechenvorschrift wendet die Intervallartihmetik an, so dass Ergebnisintervalle ermittelt werden. Die Breite der Ergebnisintervalle ist dabei insbesondere abhängig von Fehlerabschätzungen, die aufgrund der selbstvalidierenden Eigenschaften der Intervallarithmetik vorgenommen werden. Die Intervallbreite des jeweiligen Ergebnisintervalls ist somit optimiert, um ein kleinstmögliches Intervall anzugeben in dem der exakte Wert liegen soll.

Bei einer Vielzahl von Berechnungseinheiten weist vorzugsweise jede Berechnungseinheit eine eigene Implementierung der ersten Rechenvorschrift auf, um das diversitäre Prinzip zu wahren. Die ersten Rechenvorschriften der unterschiedlichen Berechnungseinheiten sind dabei zueinander äquivalent, um die Vergleichbarkeit zu gewährleisten. Jedoch sind sie vorzugsweise nicht identisch, woraus folgt, dass Ergebnisintervalle unterschiedlicher Berechnungseinheiten unterschiedliche Werte aufweisen können. Diese können nunmehr miteinander verglichen werden, da keine exakte Übereinstimmung notwendig ist sondern eine teilweise Übereinstimmung ausreichend ist, wie beispielsweise bei Vorliegen eines Schnittintervalls.

Für die Durchführung weiterer, folgender erster Rechenvorschriften durch die Berechnungseinheiten kann beispielsweise das entsprechende Ergebnisintervall weiterverarbeitet werden oder es kann beispielsweise das Schnittintervall auf Basis unterschiedlicher Ergebnisintervalle weiterverarbeitet werden. Durch die Weiterverarbeitung des Schnittintervalls innerhalb der Berechnungseinheiten werden diese automatisch zueinander synchronisiert. Dies hat den Vorteil, dass die Intervallbreite der Ergebnisintervalle reduziert und damit die Berechnungsgenauigkeit erhöht wird.

Das Sicherheitssteuergerät gibt dann ein Ausgangssignal aus, wenn ein entsprechendes Ausgabekriterium erfüllt ist. Das konkrete Ausgabekriterium ist abhängig von der konkreten Aufgabe des Sicherheitssteuergeräts. Das Ausgabekriterium kann beispielsweise dann erfüllt sein, wenn eines der Ergebnisintervalle einen vorbestimmten Wert besitzt. Alternativ oder zusätzlich ist es denkbar, dass das Ausgabekriterium dann erfüllt ist, wenn eine Abarbeitung von vorgegebenen ersten Rechenvorschriften erfolgt ist. Auch ist es denkbar, dass das Ausgabekriterium dann erfüllt ist, wenn kein Schnittintervall existiert. In diesem Fall ist es vorzugsweise vorgesehen, dass ein Ersatzwert ermittelt wird, beispielsweise durch Mittelung der einzelnen Ergebnisintervalle. Dies kann auch durch eine gewichtete Mittelung erfolgen. Ist das Ausgabekriterium erfüllt, wird ein Ausgangswert in Abhängigkeit mindestens eines Eingangsintervalls ermittelt, das heißt, es wird ein konkreter Wert ermittelt, der vorzugsweise als Gleitkommazahl dargestellt wird, um die Berechnungsgenauigkeit beizubehalten.

Das Ausgangssignal wird anschließend in Abhängigkeit des Ausgangswerts ermittelt. Dies erfolgt vorzugsweise innerhalb einer Schnittstelle zwischen dem Sicherheitssteuergerät und entsprechenden Peripheriegeräten. Dies kann beispielsweise durch einen D/A-Wandler realisiert werden. Hier ergibt sich der Vorteil, dass die hohe Genauigkeit des Ausgangswerts eine entsprechend hohe Genauigkeit beim Ausgeben des Ausgangssignals ermöglicht.

In bevorzugten Ausgestaltungen werden weitere der Verfahrensschritte redundant ausgeführt. Zudem ist es denkbar, dass weitere oder alle Verfahrensschritte in den Berechnungseinheiten ausgeführt werden.

Insgesamt ergibt sich somit die Möglichkeit, ein Eingangssignal sehr genau innerhalb eines Sicherheitssteuergeräts weiterzuverarbeiten und mit einer sehr hohen Genauigkeit ein Ausgangssignal zu ermitteln. Dabei werden die Grundkonzepte sicherer Automatisierung beibehalten, so dass eine hochgenaue und sehr sichere Automatisierung ermöglicht wird.

Somit ist die Aufgabe vollständig gelöst.

In einer bevorzugten Ausgestaltung der Erfindung wird eine Berechnungsgenauigkeit mindestens einer der Berechnungseinheiten ermittelt.

In dieser Ausgestaltung wird die Berechnungsgenauigkeit ermittelt, mit der eine der Berechnungseinheiten das jeweilige Ergebnisintervall ermittelt. Als Maß für die Berechnungsgenauigkeit kann insbesondere ein Berechnungsfehler verwendet werden.

Die Berechnungsgenauigkeit kann beispielsweise dadurch ermittelt werden, dass Rundungsschritte überwacht und deren Einfluss auf das Ergebnisintervall ermittelt werden. Weiter ist es denkbar, dass die Genauigkeit von approximativen Berechnungsmethoden, wie viele numerische Berechnungsverfahren, hierbei berücksichtigt wird.

Der Einsatz der Intervallarithmetik bietet zudem die Möglichkeit als Berechnungsgenauigkeit die Genauigkeit der Ergebnisintervalle und damit die Genauigkeit des Ausgangswerts sehr einfach zu bestimmen. Dies erfolgt vorzugsweise durch Bestimmen der Intervallbreite. Somit kann die Genauigkeit des jeweiligen Ergebnisintervalls bewertet werden.

Vorteil hierbei ist es, dass die bekannte Berechnungsgenauigkeit eingesetzt werden kann um sicherzustellen, ob ein sicherer Betrieb des Sicherheitssteuergeräts vorliegt. Beispielsweise kann das Ergebnisintervall und/oder ein Ausgangssignal in Abhängigkeit der Berechnungsgenauigkeit angepasst werden. Dies ermöglicht es auch Sicherheitsschaltgeräte mit Gleitkommawerten sicher zu betreiben, die nur eine einzelne Berechnungseinheit aufweisen, da in Abhängigkeit der Berechnungsgenauigkeit fehlerbehaftete Ausgangssignale vermieden werden können.

In einer weiteren Ausgestaltung der Erfindung wird eine Intervallbreite des Eingangsintervalls in Abhängigkeit der Berechnungsgenauigkeit bestimmt.

In dieser Ausgestaltung der Erfindung wird die Intervallbreite zur Erzeugung des Eingangsintervalls automatisch bestimmt und somit bei der Bildung von Intervallen berücksichtigt. In Abhängigkeit der Berechnungsgenauigkeit wird die Intervallbreite angepasst. Beispielsweise können bereits ausgeführte Rechenvorschriften analysiert werden und eine optimale Intervallbreite ermittelt werden. Vorteil hierbei ist es, dass die Intervallbreite dynamisch an die vorliegenden Eingangssignale angepasst wird, sodass die Berechnungsgenauigkeit dauerhaft optimiert wird.

In einer weiteren Ausgestaltung der Erfindung wird mindestens ein Reaktionsschritt ausgeführt, wenn die Berechnungsgenauigkeit einen Schwellwerte unterschreitet.

In dieser Ausgestaltung wird dann mindestens eine Gegenmaßnahme durchgeführt, wenn eine für einen sicheren Betrieb erforderliche Berechnungsgenauigkeit nicht gegeben ist. Die Gegenmaßnahme wird dann in Form eines Reaktionsschritts ausgeführt. Der Reaktionsschritt ist ein weiterer Schritt des Verfahrens. Er kann als fest vordefinierte Gegenmaßnahme erfolgen oder auch als Gegenmaßnahme in Abhängigkeit aktueller Ergebnisintervalle. Der Reaktionsschritt erfolgt dann, wenn die Berechnungsgenauigkeit den vorbestimmten Schwellwert unterschreitet. Da der Berechnungsfehler ein Maß für die Berechnungsgenauigkeit ist, ist es gleichbedeutend, wenn der Berechnungsfehler einen vorbestimmten Fehlerschwellwert überschreitet. Vorteil hierbei ist es, dass der sichere Betrieb des Sicherheitssteuergeräts überprüft und aktiv gesichert wird.

Als Reaktionsschritt kann es beispielsweise vorgesehen sein, dass das Ausgabekriterium erfüllt wird. Weiter kann es vorgesehen sein, dass dann der Ausgabewert in Abhängigkeit eines vordefinierten Werts oder in Abhängigkeit von Ergebnisintervallen weiterer Berechnungseinheiten bestimmt wird.

In einer weiteren Ausgestaltung wird eine Ergebnisintervallbreite mindestens eines der Ergebnisintervalle ermittelt, wobei dann mindestens der eine Reaktionsschritt ausgeführt wird, wenn die Ergebnisintervallbreite eine Maximalbreite überschreitet.

In dieser Ausgestaltung erfolgt eine zusätzliche Sicherung des Sicherheitssteuergeräts dadurch, dass die Ergebnisintervallbreite, also die Intervallbreite mindestens eines der Ergebnisintervalle, überwacht wird. Die Maximalbreite kann beispielsweise als vördefinierter Wert vorliegen. Alternativ oder zusätzlich ist es denkbar, dass die Ergebrisintervalle mit einem Referenzintervall verglichen werden, das die Maximalbreite hat. Vorzugsweise ist es dann vorgesehen, dass das Referenzintervall auf Basis des Eingangsintervalls oder auf Basis eines vorhergehenden Ergebnisintervalls bestimmt wird. Insbesondere ist es vorgesehen, dass dann die Maximalbreite in Abhängigkeit der Intervallbreite des Eingangsintervalls bestimmt wird. Weiter kann die Maximalbreite alternativ oder zusätzlich in Abhängigkeit von Erwartungswerten, Erfahrurigswerten, Messgenauigkeiten und/oder Rechengenauigkeiten bestimmt werden.

Übersteigt die Intervallbreite des Ergebnisintervalls die Maximalbreite, so wird der mindestens eine Reaktionsschritt ausgeführt. Vorteilhaft hierbei ist es, dass sehr effektiv sicherheitskritische Fehler ausgeschlossen werden, die durch bestimmte Abfolgen von Rechenvorschriften zu einem Ergebnisintervall mit beliebig breiter Intervallbreite führen könnten. Somit wird die Sicherheit des Sicherheitssteuergeräts insgesamt weiter erhöht.

In einer weiteren Ausgestaltung der Erfindung werden die Ergebnisintervalle der Berechnungseinheiten phasisch auf eine Intervallüberlappung überprüft, wobei dann der mindestens eine Reaktionsschritt ausgeführt wird, wenn mindestens eines der Ergebnisintervalle außerhalb der weiteren Ergebnisintervalle liegt.

In dieser Ausgestaltung werden die Ergebnisintervalle wiederkehrend miteinander verglichen. Es wird eine Intervallüberlappung bestimmt, die beispielsweise als Schnittintervall berechnet werden kann. Die Schnittintervalle beinhalten dann die gemeinsame Menge an Werten von mindestens zwei Ergebnisintervallen zweier unterschiedlicher Berechnungseinheiten. Alternativ ist es denkbar einen Vergleich der Intervallgrenzen durchzuführen. In vorteilhafter Weise wird so eine einfache Möglichkeit bereitgestellt, die Vergleichbarkeit der Ergebnisintervalle zu nutzen und dadurch den sicheren Betrieb des Sicherheitsschaltgeräts zu überprüfen.

In bevorzugten Ausgestaltungen wird die Intervallüberlappung in regelmäßigen Abständen ermittelt, so dass der sichere und korrekte Betrieb des Sicherheitssteuergeräts besonders gut gesichert ist. Dies kann beispielsweise in vorgegebenen zeitlichen Abständen erfolgen oder auch nach Abarbeitung bestimmter Rechenschritte der ersten Rechenvorschriften.

Als Reaktionsschritt kann es beispielsweise vorgesehen sein, dass das Ausgabekriterium erfüllt wird. Weiter kann es vorgesehen sein, dass dann der Ausgabewert in Abhängigkeit eines vordefinierten Werts oder in Abhängigkeit von Ergebnisintervallen weiterer Berechnungseinheiten bestimmt wird.

In einer weiteren Ausgestaltung der Erfindung wird mit mindestens einer Berechnungseinheit ein Ergebniswert in Abhängigkeit des Gleitkommawerts ermittelt, wobei jeweils mindestens eine weitere, zweite Rechenvorschrift auf den Gleitkommawert angewendet wird, die äquivalent zu einer der ersten Rechenvorschriften ist.

In dieser Ausgestaltung erfolgt die Abarbeitung einer zweiten Rechenvorschrift. Diese wird parallel zu der ersten Rechenvorschrift durchgeführt. Vorzugsweise erfolgt dies zusätzlich zu der ersten Rechenvorschrift in einer der Berechnungseinheiten. Die erste und die zweite Rechen Vorschrift sind äquivalent zueinander, wobei die erste Rechenvorschrift die Intervallarithmetik anwendet und Intervalle verarbeitet und wobei die zweite Rechenvorschrift vorzugsweise eine alternative Arithmetik aufweist und mit konkreten Werten arbeitet. Diese alternative Arithmetik kann beispielsweise eine Gleitkommaarithmetik oder eine Festkommaarithmetik sein. Äquivalent bedeutet hier, dass die zweite Rechenvorschrift die gleichen Schritte oder gleichwertige Schritte bezüglich der ersten Rechenvorschrift vornimmt.

Somit können in den Berechnungseinheiten mittels der ersten Rechenvorschrift vergleichbare Ergebnisintervalle bestimmt werden. Die zweite Rechenvorschrift ermöglicht es, die Ergebnisse der ersten Rechenvorschrift anhand von Ergebniswerten zu überprüfen. Vorteil hierbei ist es, dass die Ergebnisintervalle überprüft, und auf Basis der Ergebniswerte zusätzlich eingeschränkt werden können, sodass zu große und damit ungenaue Ergebnisintervalle vermieden werden. Ein weiterer Vorteil hierbei ist es, dass genaue Ergebniswerte vorliegen und gleichzeitig eine Vergleichbarkeit der Ergebnisse durch die Ergebnisintervalle gewährleistet ist, was den Betrieb des Sicherheitsschaltgeräts noch genauer und sicherer macht.

Zudem kann in Abhängigkeit des Ergebniswerts ein Intervall bestimmt werden, das für weitere erste Rechenvorschriften verwendet wird. Hierzu wird vorzugsweise anhand des Ergebnisintervalls ein entsprechender Wert bestimmt, der sich um einen bestimmten Betrag von dem Ergebniswert unterscheidet. Zur Bildung des nachfolgenden Intervalls kann dann dieser Betrag genommen werden, um die obere Intervallgrenze und die untere Intervallgrenze zu definieren, wobei von dem hochgenauen Ergebniswert ausgegangen wird und für die obere Intervallgrenze der Betrag auf den Ergebniswert aufaddiert bzw. für die untere Intervallgrenze der Betrag subtrahiert wird. Vorteil hierbei ist ein einfacherer und noch sicherer Betrieb des Sicherheitssteuergeräts.

In einer weiteren Ausgestaltung der Erfindung wird der Ergebniswert mit mindestens einem der Ergebnisintervalle verglichen, wobei dann der mindestens eine Reaktionsschritt ausgeführt wird, wenn der Ergebniswert außerhalb des Ergebnisintervalls liegt.

In dieser Ausgestaltung werden die Ergebnisintervalle zusätzlich durch die Ergebniswerte validiert. Der Ergebniswert aus der zweiten Rechenvorschrift wird hierzu vorzugsweise mit dem Ergebnisintervall einer weiteren Berechnungseinheit verglichen. In anderen Worten, die Ergebnisintervalle und Ergebniswerte werden "überkreuzt" verglichen. Dabei müssen die Ergebniswerte innerhalb der jeweils verglichenen Ergebnisintervalle liegen, damit ein sicherer Betrieb vorliegt. Ist dies nicht der Fall, so wird der Reaktionsschritt ausgeführt.

In einer weiteren Ausgestaltung der Erfindung hält der Reaktionsschritt das Verfahren in mindestens einer der Berechnungseinheiten an.

In dieser Ausgestaltung wird als Reaktionsschritt das Verfahren gestoppt. Dies kann in nur einer Berechnungseinheit erfolgen, beispielsweise, wenn noch mehrere Berechnungseinheiten den redundanten Betrieb weiterhin gewährleisten können. Alternativ kann auch das gesamte Sicherheitssteuergerät in seinem Betrieb gestoppt werden.

In bevorzugten Ausgestaltungen ist es zudem vorgesehen, dass dann das Ausgabekriterium erfüllt wird. In weiteren bevorzugten Ausgestaltungen wird dann ein vordefiniertes Ausgangssignal ausgegeben, dass einen sicheren Zustand der vom Sicherheitssteuergerät gesteuerten Maschine gewährleistet.

Vorteil hierbei ist es, dass eine Steuerung der Maschine auf Basis möglicherweise fehlerhaften Ausgangssignale wirksam ausgeschlossen wird.

In einer weiteren Ausgestaltung der Erfindung synchronisiert der Reaktionsschritt mindestens zwei der Berechnungseinheiten.

In dieser Ausgestaltung wird als Reaktionsschritt eine Synchronisation der Berechnungseinheiten auf gemeinsame Werte vorgenommen, die einem weiteren Betrieb zugrunde liegen sollen. Dabei können beispielsweise die Eingangsintervalle, die Ergebnisintervalle oder für wiederholte Rechenvorschriften übergebene Werte synchronisiert werden. Hierdurch wird in vorteilhafter Weise erreicht, dass das Sicherheitssteuergerät selbst in seiner Verarbeitung überprüft wird und damit eine noch höhere Sicherheit gewährleistet ist.

Der Vollständigkeit halber wird darauf hingewiesen, dass unterschiedliche Auslöser des Reaktionsschritts auch unterschiedlich ausgestaltete Reaktionsschritte zur Folge haben können. Auch können mehrere unterschiedliche Reaktionsschritt gleichzeitig ausgelöst werden.

In einer Ausgestaltung der Erfindung wird das Eingangssignal aus einem Daten-BUS erfasst.

In dieser Ausgestaltung empfängt das Sicherheitssteuergerät das Eingangssignal aus dem Daten-BUS, also in digitaler Form. Hierdurch wird erreicht, dass das Sicherheitssteuergerät beispielsweise mit einem Eingangsmodul verbunden werden kann. Das Eingangsmodul empfängt dann Daten von einem entsprechenden Meldegerät und kann diese in eine digitale Form wandeln. Insbesondere wird die Möglichkeit gegeben, dass das Eingangssignal selbst bereits in Form einer Gleitkommazahl an das Sicherheitssteuergerät übergeben wird. In diesem Fall kann das Eingangssignal direkt dem Gleitkommawert entsprechen.

Ein Vorteil hierbei ist es, dass ein modularer Aufbau einer Anordnung mit dem Sicherheitssteuergerät ermöglicht wird, wobei das Sicherheitssteuergerät mit unterschiedlichen Eingangsmodulen zusammenarbeiten kann. Hierdurch entsteht ein modularer Aufbau und ein einzelnes Sicherheitssteuergerät kann in einfacher Weise mit unterschiedlichen Meldegeräten verbunden werden, indem das Eingangsmodul angepasst wird.

In einer weiteren Ausgestaltung wird das Ausgangssignal an dem Daten-BUS ausgegeben.

In dieser Ausgestaltung sendet das Sicherheitssteuergerät das Ausgangssignal an den Daten-BUS, also in digitaler Form. Hierdurch wird erreicht, dass das Sicherheitssteuergerät beispielsweise mit einem Ausgangsmodul verbunden werden kann. Das Ausgangsmodul sendet dann ein Signal zu einem entsprechenden Aktor, das eine sicherheitsrelevante Stellgröße für die Maschine steuert. Insbesondere wird die Möglichkeit gegeben, dass das Ausgangssignal selbst in Form einer Gleitkommazahl an den Aktor übergeben wird. In diesem Fall kann der Ausgangswert direkt dem Ausgangssignal entsprechen.

Ein Vorteil hierbei ist es, dass ein modularer Aufbau einer Anordnung mit dem Sicherheitssteuergerät ermöglicht wird, wobei das Sicherheitssteuergerät mit unterschiedlichen Ausgangsmodulen zusammenarbeiten kann. Hierdurch entsteht ein modularer Aufbau und ein einzelnes Sicherheitssteuergerät kann in einfacher Weise mit unterschiedlichen Aktoren verbunden werden, indem das Ausgangsmodul angepasst wird.

Als Daten-BUS kann beispielsweise ein CAN-BUS oder ein Safety-BUS eingesetzt werden.

Der CAN-BUS hat den Vorteil, dass dieser in der Industrie häufig verfügbar ist und somit eine wirtschaftliche Umsetzung und Kompatibilität des Sicherheitssteuergeräts erreicht wird. Der Safety-BUS hat den Vorteil einer speziell für sicherheitsrelevante Zwecke angepassten Architektur, sodass durch Einsatz des Safety-BUS eine besonders hohe Sicherheit für den Betrieb erreicht wird.

In einer weiteren Ausgestaltung wird mittels des Ausgangssignals ein Aktor für einen sicherheitsrelevanten Zustandsparameter einer Maschine gesteuert.

In dieser Ausgestaltung wird die hohe Genauigkeit des Ausgangssignals dazu benutzt, eine Maschine sehr genau und sicher zu steuern. Als Zustandsparameter sind in Abhängigkeit der zu steuernden Maschine beispielsweise eine Temperatur, ein Druck, eine Drehzahl oder eine Raumposition (beispielsweise eine Werkzeugposition bei einer Fräsmaschine) denkbar. Vorteil hierbei ist es, dass sicherheitskritische Systeme nicht nur überwacht, sondern auch hochgenau gesteuert werden können.

In einer weiteren Ausgestaltung wird als Eingangssignal ein Sensorsignal eines Sensors erfasst, der den sicherheitsrelevanten Zustandsparameter der Maschine erfasst.

In dieser Ausgestaltung entspricht das Eingangssignal dem Zustandsparameter der Maschine. Durch die hohe Genauigkeit kann der Zustandsparameter direkt innerhalb des Sicherheitssteuergeräts weiterverarbeitet werden. In einer besonders bevorzugten Ausgestaltung erfolgt eine Regelung der Maschine anhand des erfassten Zustandsparameters mittels des Aktors für den Zustandsparameter der Maschine.

Als Sensor sind an dem Zustandsparameter angepasste Sensoren bevorzugt denkbar, wie beispielsweise ein Temperatursensor, ein Drucksensor, ein Drehzahlsensor und/oder ein Positionsmesssensor.

In einer weiteren Ausgestaltung kann ein Schaltsignal eines Not-Aus-Tasters empfangen werden.

In dieser Ausgestaltung ist ein Not-Aus-Taster mit dem Sicherheitssteuergerät verbunden. Das Schaltsignal des Not-Aus-Tasters wird von dem Sicherheitssteuergerät empfangen. Dieses kann dazu verwendet werden, das Ausgabekriterium zu erfüllen. Dies bedeutet, wird der Not-Aus-Taster gedrückt und damit das Schaltsignal ausgelöst, dann erfolgt eine Ausgabe des Ausgangssignals. Alternativ oder zusätzlich ist es denkbar, dass bei Erfassen des Schaltsignals des Not-Aus-Tasters der Ausgabewert in Abhängigkeit eines vordefinierten Werts bestimmt wird, so dass ein bekannter und definierter Zustand der gesteuerten Maschine eingestellt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Figur 1     eine schematische Darstellung eines ersten Ausführungsbeispiels eines Sicherheitssteuergeräts in einer ersten Maschinenanlage,

Figur 2    eine schematische Darstellung eines zweiten Ausführungsbeispiels des Sicherheitssteuergeräts in einer zweiten Maschinenanlage,

Figur 3    eine schematische Darstellung eines dritten Ausführungsbeispiels des Sicherheitssteuergeräts in der zweiten Maschinenanlage in Verbindung mit einem Daten-BUS,

Figur 4    ein Flussdiagramm. eines bevorzugten Ausführungsbeispiels des erfindungsgemäßen Verfahrens,

Figur 5    ein Ausschnitt des Flussdiagramms aus Figur 4, wobei zusätzlich Berechnungsgenauigkeiten ermittelt werden,

Figur 6    ein Ausschnitt des Flussdiagramms aus Figur 4, wobei zusätzlich Ergebniswerte ermittelt werden,

Figur 7    eine schematische Darstellung eines Signalverlaufs, wobei redundant Ergebnisintervalle ermittelt werden und

Figur 8    eine schematische Darstellung eines Signalverlaufs, wobei zusätzlich ein Ergebniswert ermittelt wird.

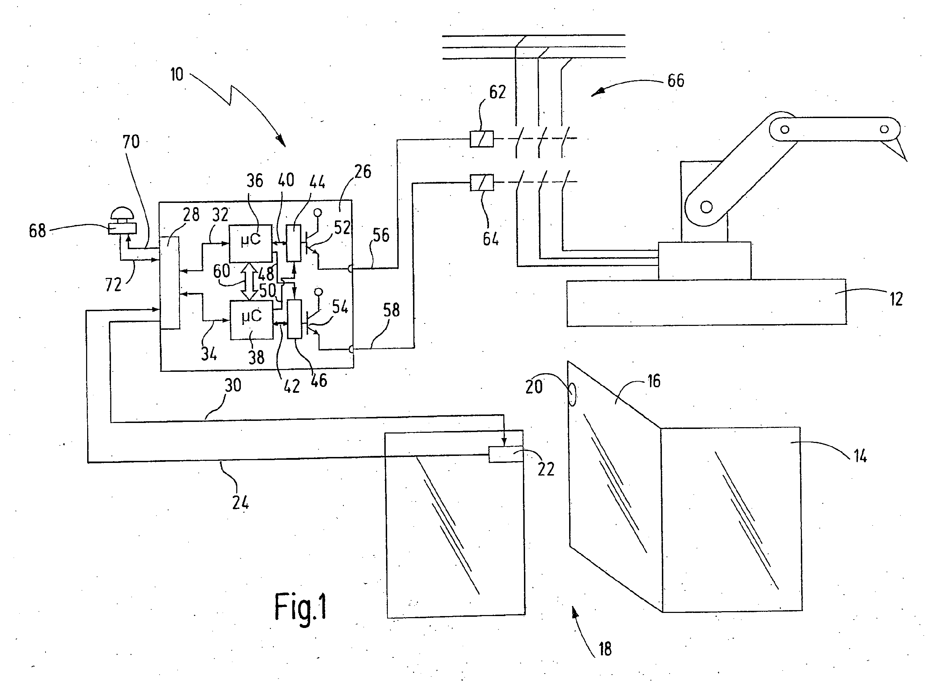

In Fig. 1 ist eine Anlage mit einem Ausführungsbeispiel des neuen Sicherheitssteuergeräts in der Gesamtheit mit der Bezugsziffer 10 bezeichnet. Die Anlage 10 beinhaltet hier beispielsweise einen Roboter 12, von dessen Bewegungen im Arbeitsbetrieb eine Gefahr für Personen ausgeht, die sich in einem Arbeitsbereich des Roboters 12 aufhalten. Aus diesem Grund ist der Einsatzbereich des Roboters 12 mit einem Schutzzaun 14 abgesichert, der eine Schutztür 16 aufweist. Die Schutztür 16 ermöglicht einen Zugang in den Arbeitsbereich, beispielsweise für Wartungsarbeiten oder für Einrichtearbeiten. In einem normalen Arbeitsbetrieb soll der Roboter 12 nur dann arbeiten, wenn die Schutztür 16 geschlossen ist. Sobald die Schutztür 16 geöffnet wird, muss der Roboter 12 abgeschaltet werden oder auf andere Weise in einen sicheren Zustand gebracht werden.

Um den Zustand der Schutztür 16 zu detektieren, ist an der Schutztür 16 ein Schutztürschalter 18 angebracht, der ein Türteil 20 und ein Rahmenteil 22 besitzt. Das Rahmenteil 22 erzeugt auf einer Leitung 24 ein Schutztürsignal, das über die Leitung 24 einem Sicherheitssteuergerät 26 als Eingangssignal zugeführt wird.

Das Sicherheitssteuergerät 26 besitzt eine Eingangseinheit 28 mit einer Vielzahl von Geräteanschlüssen, wobei die Leitung 24 über einen der Geräteanschlüsse mit der Eingangseinheit 28 verbunden ist. Um das Eingangssignal zu erzeugen ist zudem vorgesehen, dass die Eingangseinheit 28 mit einer Signalleitung 30 verbunden ist, über die ein Pulssignal an das Rahmenteil 22 gesendet wird. Das Eingangssignal auf der Leitung 24 wird in der Eingangseinheit 28 in einen Gleitkommawert umgewandelt. Der Gleitkommawert ist ein digitaler Wert, der in einem Datentyp einer Gleitkommazahl dargestellt wird. Über Signalleitungen 32 und 34 wird der Gleitkommawert an Berechnungseinheiten 36 und 38 weitergeleitet. Die Berechnungseinheiten 36 und 38 sind jeweils als Mikrocontroller ausgebildet. Dabei handelt es sich um Mikrocontroller unterschiedlicher Bauart, so dass eine diversitäre Hardwarestruktur gegeben ist. Innerhalb der Berechnungseinheiten 36 und 38 wird jeweils ein Eingangsintervall in Abhängigkeit des Gleitkominawerts gebildet. Anschließend erfolgt die Ausführung einer ersten Rechenvorschrift in jeder Berechnungseinheit 36 und 38 getrennt. Die ersten Rechenvorschriften, die innerhalb der Berechnungseinheiten 36 und 38 eingesetzt werden, sind ebenfalls diversitär implementiert, so dass hierdurch eine sehr hohe Sicherheit gewährleistet ist.

Ergebnisintervalle, die Zwischenergebnisse oder Endergebnisse darstellen können, werden über Pfeile 40 und 42 an Vergleichseinheiten 44 und 46 weitergeleitet. Die Vergleichseinheiten 44 und 46 erhalten zudem über Pfeile 48 und 50 das jeweilige Ergebnisintervall der anderen Berechnungseinheit 36 oder 38. Innerhalb der Vergleichseinheiten 44 und 46 werden auch die Ergebnisintervalle miteinander verglichen. Überlappen die Ergebnisintervalle, so wird geprüft, ob ein Ausgabekriterium erfüllt ist. Das Ausgabekriterium ist hier dann erfüllt, wenn die Ergebnisintervalle einen gemeinsamen Wert beinhalten, der einer geöffneten Schutztür 16 entspricht.

Im dargestellten Fall wird dann ein Ausgangssignal gesendet, wenn die Tür 16 geöffnet ist. In diesem Fall bestimmen die Vergleichseinheiten 44, 46 jeweils einen Ausgangswert. Der Ausgangswert entspricht hier einer ausreichenden Bestromung von Transistoren 52 oder 54. Diese erzeugen somit anhand des Ausgangswerts ein Ausgangssignal, das über Ausgangsleitungen 56 und 58 redundant ausgegeben werden kann. Zudem ist es vorgesehen, dass die Berechnungseinheiten 36 und 38 miteinander synchronisiert werden können, was durch einen Doppelpfeil 60 schematisch dargestellt ist. Das Synchronisieren kann regelmäßig erfolgen und/oder auch als Reaktionsschritt auf einen entsprechenden Auslöser. Die Ausgangssignale werden über die Leitungen 56 und 58 zu Schützen 62 und 64 geleitet, die in Abhängigkeit des Ausgangssignals eine Stromversorgung 66 des Roboters 12 unterbrechen.

Über die Eingangseinheit 28 ist das Sicherheitssteuergerät 26 zusätzlich mit einem Not-Aus-Taster 68 mittels Leitungen 70 und 72 verbunden. Wird der Not-Aus-Taster 68 betätigt, so wird über die Leitung 72 ein Schaltsignal an das Sicherheitssteuergerät 26 weitergeleitet. Wird dieses Schaltsignal empfangen, so wird es von den Berechnungseinheiten 36 und 38 als solches erkannt und das Ausgabekriterium wird direkt erfüllt. In dem Ausführungsbeispiel wird dann der Ausgangswert automatisch auf einen vordefinierten Wert zur ausreichenden Bestromung der Transistoren 52 und 54 gestellt, so dass die Schütze 62 und 64 die Stromversorgung 66 unterbrechen.

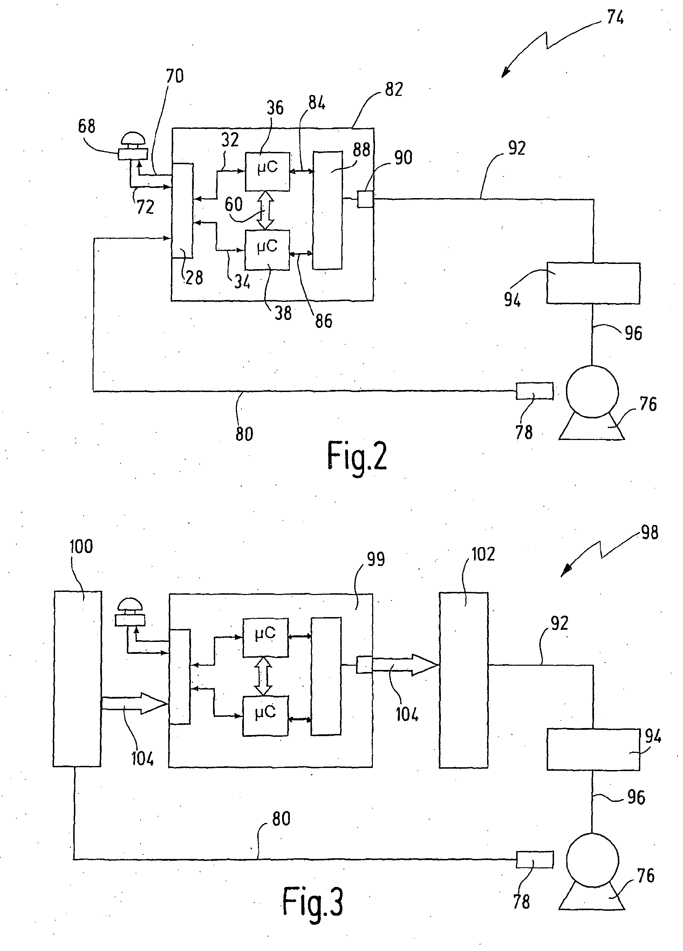

Fig. 2 zeigt eine weitere Anlage mit einem Sicherheitssteuergerät, das in seiner Gesamtheit mit der Bezugsziffer 74 bezeichnet ist. Die Anlage 74 weist einen Elektromotor 76 auf, dessen Drehzahl über einen Drehzahlsensor 78 erfasst wird. Die Information über die Drehzahl wird über eine Leitung 80 an ein Sicherheitssteuergerät 82 weitergeleitet, das die Drehzahl regelt. Das Sicherheitssteuergerät 82 weist die Eingangseinheit 28 auf, die der Eingangseinheit 28 aus Fig. 1 entspricht. Zudem ist der Not-Aus-Taster 68 mit Leitungen 70 und 72 wie in Fig. 1 vorgesehen. Die Gleitkommawerte aus der Eingangseinheit 28 werden über die Leitungen 32 und 34 an die Berechnungseinheiten 36 und 38 weitergeleitet. Die Ergebnisintervalle, die durch die Berechnungseinheiten 36 und 38 ermittelt werden, werden über Leitungen 84 und 86 an eine einzelne Vergleichseinheit 88 weitergeleitet. Die Vergleichseinheit 88 prüft, ob eine Intervallüberlappung zwischen den Ergebnisintervallen existiert.

Ist dies der Fall, dann wird ein Ausgangswert ermittelt. Dies kann beispielsweise durch Mittelung oder durch eine gewichtete Mittelung einer oder mehrerer Ergebnisintervalle erfolgen. Der so gebildete Ausgangswert wird über eine Ausgabeeinheit 90 in Form eines D/A-Wandlers und über eine Ausgangsleitung 92 an eine Leistungselektronik 94 weitergeleitet. Die Leistungselektronik 94 empfängt das Ausgangssignal und erzeugt in Abhängigkeit des Ausgangssignals ein Steuersignal, welches über die Leitung 96 an den Elektromotor 76 weitergeleitet wird.

Ist keine Intervallüberlappung vorhanden, so wird ein Ersatzwert in Abhängigkeit der beiden Ergebnisintervalle durch Mittelung bestimmt und dieser an die Ausgabeeinheit 90 weitergeleitet. Gleichzeitig werden die Berechnungseinheiten 36 und 38 miteinander über den Pfeil 60 synchronisiert.

Alternativ oder zusätzlich ist es vorgesehen, dass das Ausgabekriterium dann erfüllt ist, wenn keine Intervallüberlappung vorhanden ist. In diesem Fall wird der Ausgangswert bevorzugt auf einen vordefinierten Wert eingestellt, welcher beispielsweise eine Drehzahl von 0 oder eine niedrige und sichere Drehzahl sein kann. Somit wird der Elektromotor 76 entweder abgeschaltet oder in einen stabilen Zustand überführt, wenn die Ergebnisintervalle nicht zumindest teilweise übereinstimmen.

Wird der Not-Aus-Taster 68 gedrückt, erfolgt eine entsprechende Überführung der Anlage 74 in einen sicheren Zustand.

Fig. 3 zeigt eine weitere Anlage, die in ihrer Gesamtheit mit der Bezugsziffer 98 bezeichnet ist. Sie unterscheidet sich von der Anlage 74 aus Fig. 2 dadurch, dass ein Sicherheitssteuergerät 99 mit einem externen Eingangsmodul 100 und einem externen Ausgangsmodul 102 zusammenwirkt.

In diesem Ausführungsbeispiel empfängt das Eingangsmodul 100 das Signal auf der Leitung 80 und wandelt dieses in ein digitales Signal um, welches über einen Safety-BUS 104 als das Eingangssignal an das Sicherheitssteuergerät 99 weitergeleitet wird. In entsprechender Weise wird das Ausgangssignal als digitaler Wert über den Safety-BUS 104 an das Ausgangsmodul 102 weitergeleitet, welches das Steuersignal über die Leitung 92 an die Leistungselektronik 94 weitergibt.

Das Eingangsmodul 100 ermittelt in Abhängigkeit des Signals aus der Leitung 80 einen digitalen Wert in Form einer Gleitkommazahl. Der digitale Wert wird über den Safety-BUS 104 weitergeleitet. Somit kann das Signal aus der Leitung 80 besonders genau ausgewertet und von dem Sicherheitssteuergerät 99 verarbeitet werden. Weiter wird ein digitaler Wert als Ausgangssignal in Form einer Gleitkommazahl über den Safety-BUS 104 an das Ausgabemodul 102 weitergeleitet, so dass dieses ein hochexaktes Signal ausgeben kann. Hieraus ergibt sich ein modularer Aufbau für ein System mit dem Sicherheitssteuergerät 99 zum Steuern und/oder Regeln der Anlage 98. Das Sicherheitssteuergerät 99 kann somit in verschiedenen Anlagen eingesetzt werden, wobei in Abhängigkeit der Anforderungen von Meldegeräten und Aktoren entsprechende Module ausgewählt werden können.

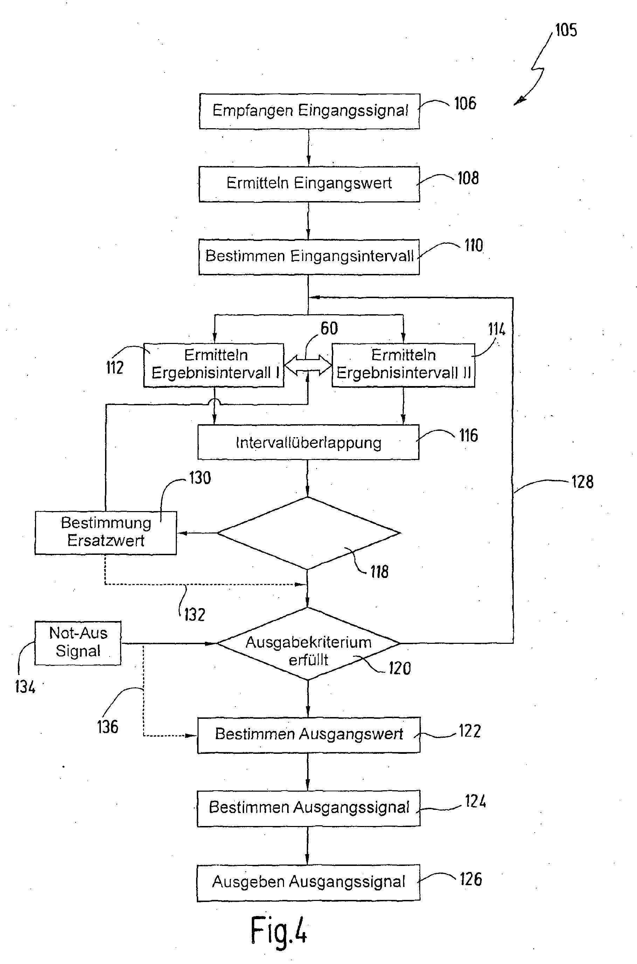

Fig. 4 zeigt ein Flussdiagramm, das in seiner Gesamtheit mit der Bezugsziffer 105 bezeichnet ist. Das Flussdiagramm 105 beschreibt ein Ausführungsbeispiel des erfindungsgemäßen Verfahrens.

In einem Schritt 106 wird von einem Sicherheitssteuergerät ein Eingangssignal empfangen. Dies kann beispielsweise ein digitales oder analoges Eingangssignal sein.

In Schritt 108 wird ein Gleitkommawert ermittelt, der als Gleitkommazahl dargestellt wird. Der konkrete Zahlenwert des Gleitkommawerts ergibt sich dabei aus dem Eingangssignal, wobei dieser bei einem analogen Eingangssignal beispielsweise durch einen A/D-Wandler bestimmt werden kann.

In einem Schritt 110 wird zumindest ein Eingangsintervall anhand des Gleitkommawerts bestimmt. Hierzu wird eine obere Intervallgrenze und eine untere Intervallgrenze definiert, wobei der Gleitkommawert zwischen den beiden Intervallgrenzen liegt. Der Abstand der Intervallgrenzen zu dem Gleitkommawert kann auf unterschiedliche Weise definiert werden. Hier erfolgt dies durch einen vordefinierten Wert, der aus einem Speicher ausgelesen wird. Zudem werden in dem Schritt 110 weitere Intervalle definiert, die notwendig sind, um zusätzliche Operatoren für eine spätere Berechnung vorzubereiten.

Weiter ist es denkbar, dass das Bestimmen des Eingangsintervalls redundant verläuft, so dass anhand des einen Gleitkommawerts zwei Eingangsintervalle in den verschiedenen Berechnungseinheiten parallel zueinander bestimmt werden.

Das Eingangsintervall wird in den parallel ablaufenden Schritten 112 und 114 weiterverarbeitet. Hierbei ermitteln die Berechnungseinheiten jeweils ein Ergebnisintervall, die hier zur besseren Unterscheidung als Ergebnisintervall I und als Ergebnisintervall II bezeichnet sind. Die Ergebnisintervalle I und II werden durch die ersten Rechenvorschriften anhand des Eingangsintervalls und in Abhängigkeit zusätzlicher Parameter ermittelt.

Die Ergebnisintervalle I und II werden an einen weiteren Schritt 116 weitergegeben. In dem Schritt 116 wird eine Intervallüberlappung bestimmt, beispielsweise in Form eines Schnittintervalls. Dies kann durch eine einfache Mengenoperation erfolgen.

Die Intervallüberlappung wird an einen weiteren Schritt 118 übergeben. Dieser prüft, ob die Intervallüberlappung vorliegt. Liegt die Intervallüberlappung vor, dann wird in einem Folgeschritt 120 geprüft, ob diese Intervallüberlappung ein Ausgabekriterium erfüllt. Erfüllt die Intervallüberlappung oder erfüllen alternativ die Ergebnisintervalle das Ausgabekriterium, wird in Abhängigkeit der Intervallüberlappung oder der Ergebnisintervalle ein Ausgangswert in einem Schritt 122 bestimmt. Dieser Ausgangswert wird hier dadurch berechnet, dass die Intervallüberlappung gemittelt wird. Daraus ergibt sich als Ausgangswert wiederum eine Gleitkommazahl.

In Abhängigkeit der Gleitkommazahl wird in einem weiteren Schritt 124 ein Ausgangssignal erzeugt. Dies kann beispielsweise durch einen D/A-Wandler erfolgen.

Abschließend erfolgt eine Ausgabe des Ausgangssignals an Peripheriegeräte in einem Schritt 126, die mit dem Sicherheitssteuergerät signaltechnisch verbunden sind.

Ausgehend von Schritt 120 erfolgt schleifenartig über einen Pfeil 128 dann der Ablauf einer weiteren ersten Rechenvorschrift, wenn das Ausgabekriterium durch die Intervallüberlappung nicht erfüllt wird. Somit ist gewährleistet, dass nach Ablauf erster Rechenvorschriften in den Schritten 112 und 114 regelmäßig ermittelt wird, ob die Ergebnisintervalle vergleichbare Ergebnisse liefern und gleichzeitig ein Ablauf komplexerer Programme nicht unterbrochen wird, die aus einer Abfolge von ersten Rechenvorschriften bestehen.

Ausgehend von Schritt 118 wird dann zu einem Schritt 130 übergegangen, wenn keine Intervallüberlappung vorliegt. In Schritt 130 wird als Reaktionsschritt ein Ersatzwert bestimmt, was beispielsweise durch Mittelung der Ergebnisintervalle I und II erfolgen kann. Dieser Wert wird dann an die Berechnungseinheiten zurückgegeben, wobei als weiterer Reaktionsschritt eine Synchronisation 60 erfolgt. Alternativ oder zusätzlich ist es denkbar, dass der Ersatzwert über einen Pfeil 132, der hier gestrichelt dargestellt ist, an den Schritt 120 ausgegeben wird. Im Schritt 120 wird dann erkannt, dass es sich um einen Ersatzwert handelt und somit keine Intervallüberlappung vorliegt. Anhand dieser Informationen können unterschiedliche weitere Reaktionsschritte ausgeführt werden. Ein Reaktionsschritt ist es, dass das Auswahlkriterium erfüllt ist. Weiter wird der Ersatzwert zur Bestimmung des Ausgangswerts in Schritt 122 verwendet. Als Alternative ist ein Anhalten der Sicherheitssteuergeräts oder des Verfahrens denkbar.

Zusätzlich ist es vorgesehen, dass in einem Schritt 134 ein Not-Aus-Signal des Not-Aus-Tasters 68 erfasst wird. Dieses wird einem Schritt 120 übergeben, welcher dort das Ausgabekriterium erfüllen kann. Die Erfüllung des Ausgabekriteriums durch das Not-Aus-Signal kann wiederum unterschiedliche Folgen haben. Zum einen kann dadurch eine Ausgabe des momentanen Ausgabewerts erzwungen werden. Alternativ ist es denkbar, dass der Ausgangswert im Schritt 122 anhand des Not-Aus-Signals selber gebildet wird, wie dies beispielsweise durch den gestrichelten Pfeil 136 dargestellt ist. Als weitere Alternative ist es denkbar, dass der Ausgangswert in Abhängigkeit eines vordefinierten Werts bestimmt wird, wenn das Ausgabekriterium durch das Not-Aus-Signal erfüllt wird.

Insgesamt ergibt sich daraus ein Verfahren, das eine Berechnung mit Gleitkommazahlen erlaubt, wobei gleichzeitig Aspekte berücksichtigt werden, wie eine redundante Abarbeitung des Verfahrens, die Möglichkeit zum Einsatz von diversitärer Hardware und Software sowie die Möglichkeit zur Zertifizierung des Verfahrens.

In weiteren hier nicht dargestellten Ausführungsformen können sämtliche dargestellten Schritte einfach oder mehrfach redundant ausgelegt sein, so dass die Sicherheit hierdurch weiter erhöht wird.

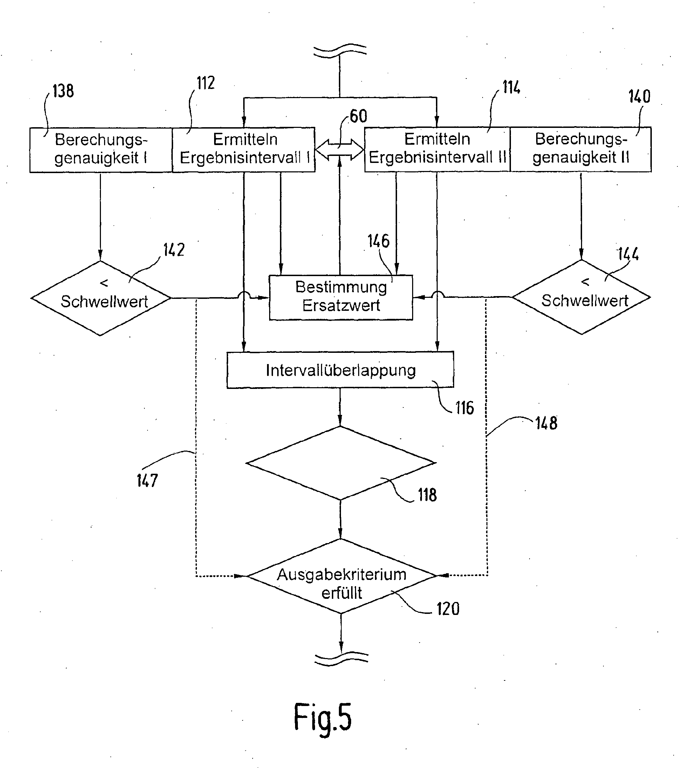

Fig. 5 zeigt einen Ausschnitt des Verfahrens aus Fig. 4, wobei zusätzlich Berechnungsgenauigkeiten I und II in den Schritten 112 und 114 erfasst werden. Eine Berechnungsgenauigkeit I des Schritts 112 wird in einem Schritt 138 parallel zu Schritt 112 ermittelt. Entsprechend wird eine Berechnungsgenauigkeit II parallel zu Schritt 114 in einem Schritt 140 ermittelt.

Die Berechnungsgenauigkeit kann beispielsweise dadurch ermittelt werden, dass Rundungsvorgänge und numerische Schätzverfahren innerhalb der ersten Rechenvorschriften erfasst und deren Fehler aufaddiert werden.

Die Berechnungsgenauigkeiten I und II werden an die Schritte 142 und entsprechend 144 weitergeleitet. In den Schritten 142 und 144 werden die Berechnungsgenauigkeiten I und II mit jeweiligen Schwellwerten verglichen. Liegen die Berechnungsgenauigkeiten I und II oberhalb des Schwellwerts, so erfolgt keine Aktion. Liegen Sie jedoch unterhalb der jeweiligen Schwellwerte, so erfolgt in einem Schritt 146 die Bestimmung eines weiteren Ersatzwerts, wobei an den Schritt 146 zu diesem Zweck auch die Ergebnisintervalle I und II aus den Schritten 112 und 114 übergeben werden. Der Ersatzwert aus Schritt 146 wird anschließend dazu verwendet, eine Synchronisation 60 an den Berechnungseinheiten durchzuführen.

In einer alternativen Ausgestaltung wird das Ausgabekriterium in Schritt 120 dann erfüllt, wenn einer der Schwellwerte aus den Schritten 142 oder 144 unterschritten wird. Dies ist durch die gestrichelt dargestellten Pfeile 147 und 148 dargestellt.

Wird das Ausgabekriterium durch Unterschreiten der Schwellwerte erfüllt, so ergibt sich wiederum die Möglichkeit, dass der Ausgangswert in Abhängigkeit der letzten Intervallüberlappung bestimmt wird oder dass der Ausgangswert anhand eines vordefinierten Werts für diese Zahl bestimmt wird.

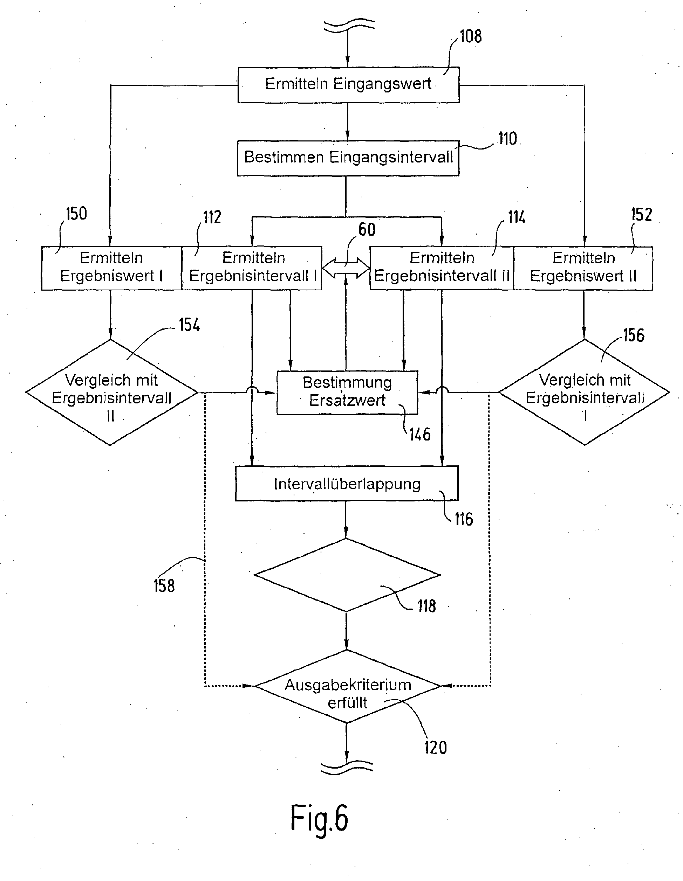

Fig. 6 zeigt ebenfalls einen Ausschnitt des Flussdiagramms aus Fig. 4. Zusätzlich zu den in Fig. 4 dargestellten Schritten werden parallel zu der Abarbeitung der ersten Rechenvorschriften bezüglich der Ergebnisiritervalle auch Ergebniswerte I und II ermittelt. Dies erfolgt in den Schritten 150 und 152. In den Schritten 150 und 152 wird der Gleitkommawert aus Schritt 108 übergeben. Innerhalb der Schritte 150 und 152 werden jeweils angepasste zweite Rechenvorschriften auf die Gleitkommazahlen angewendet, so dass die Ergebniswerte I und II ermittelt werden können. Die zweiten Rechenvorschriften aus den Schritten 150 und 152 sind jeweils äquivalent zu den ersten Rechenvorschriften der Schritte 112 und 114. Sie unterscheiden sich von den ersten Rechenvorschriften in den Schritten 112 und 114 dadurch, dass nicht mit Intervallen gerechnet wird.

Die Ergebniswerte I und II werden an Schritte 154 und 156 weitergeleitet. In Schritt 154 wird der Ergebniswert I aus Schritt 150 mit dem Ergebnisintervall II aus Schritt 114 verglichen. Liegt der Ergebniswert I in dem Ergebnisintervall II, so erfolgt keine weitere Maßnahme. Liegt der Ergebniswert I nicht in dem Ergebnisintervall II, so wird in Schritt 146 ein weiterer Ersatzwert bestimmt, wobei der Schritt 146 die aktuellen Ergebnisintervalle I und II aus den Schritten 112 und 114 enthält. Anschließend wird als Reaktionsschritt eine Synchronisation 60 durchgeführt. Alternativ hierzu kann entsprechend, wie in Fig. 5 beschrieben, das Ausgabekriterium über einen Pfeil 158 erfüllt werden. Daraus ergibt sich ebenfalls die Möglichkeit, das Ausgabekriterium je nach Bedarf unterschiedlich zu bestimmen.

Schritt 156 arbeitet entsprechend wie Schritt 154, wobei hier geprüft wird, ob der Ergebniswert II aus Schritt 152 in dem Ergebnisintervall I aus Schritt 112 liegt.

Der Vollständigkeit halber wird hier darauf hingewiesen, dass das Verfahren nicht auf die einzelne Ausführungsbeispiele der Fig. 4, 5 oder 6 begrenzt ist, sondern vielmehr eine Kombination der unterschiedlichen Varianten möglich ist.

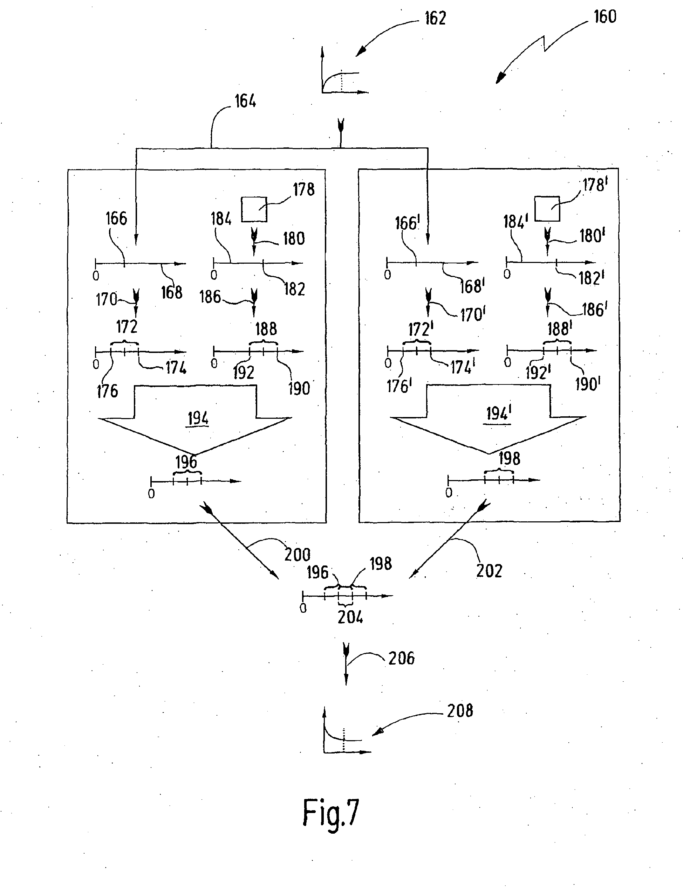

Fig.7 zeigt einen Signalverlauf 160 innerhalb eines erfindungsgemäßen Sicherheitssteuergeräts. Ein Eingangssignal 162 wird über einen Pfeil 164 an die Berechnungseinheiten 36 und 38 weitergeleitet. Beide Berechnungseinheiten 36 und 38 werden auf äquivalente Weise betrieben, wobei sie diversitär ausgebildet sind.

Das Eingangssignal 162 wird in einen Gleitkommawert 166 umgewandelt, der auf einem Zahlenstrahl 168 dargestellt ist. Ein Pfeil 170 zeigt einen nächsten Schritt an. In diesem wird ein Eingangsintervall 172 mit einer oberen Intervallgrenzen 174 und einer unteren Intervallgrenze 176 in Abhängigkeit des Gleitkommawerts 166 bestimmt. Parallel hierzu wird aus einem Speicher 178 über einen Pfeil 180 ein Parameterwert 182 ausgelesen. Der Parameterwert 182 ist ebenfalls auf einem Zahlenstrahl 184 dargestellt. In Pfeil 186 wird ein Intervall 188 mit einer oberen Intervallgrenze 190 und einer unteren Intervallgrenze 192 gebildet.

Eine erste Rechenvorschrift 194 ist als Blockpfeil dargestellt. Dieser Rechenvorschrift werden das Eingangsintervall 172 und das Intervall 188 übergeben. Die erste Rechenvorschrift bestimmt dann ein Ergebnisintervall 196.

In entsprechender Weise wird von der Berechnungseinheit 38 ein Ergebnisintervall 198 ermittelt, dass sich von dem Ergebnisintervall 196 unterscheidet.

Über Pfeile 200 und 202 werden die Ergebnisintervalle 196 und 198 zusammengeführt. Anschließend wird eine Intervallüberlappung 204 ermittelt. Schließlich können weitere Schritte ausgeführt werden, wie dies bereits beschrieben wurde und was hier durch einen Pfeil 206 gezeigt ist, sodass ein Ausgangssignal 208 gebildet wird.

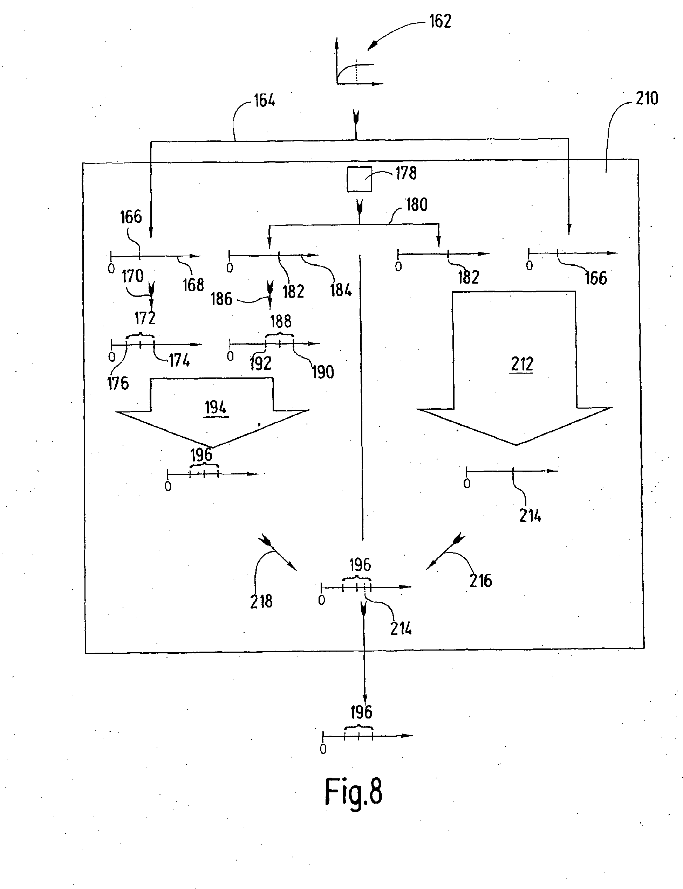

Fig. 8 zeigt einen weiteren Signalverlauf für eine einzelne Berechnungseinheit 210. Diese weist den Signalverlauf in wder Berechnungseinheit 36 aus Fig. 7 auf, der hier mit gleichen Bezugsziffern versehen ist. Zudem wird eine zweite Rechenvorschrift 212 ausgeführt, die hier als Blockpfeil dargestellt ist. Die zweite Rechenvorschrift 212 ermittelt einen Ergebniswert 214 direkt in Abhängigkeit des Gleitkommawerts 166 und des Parameterwerts 182. Über Pfeile 216 und 218 werden das Ergebnisintervall 196 und der Ergebniswert 214 miteinander verglichen um das Ergebnisintervall 196 zu validieren. Ist dies erfolgt, so wird das Ergebnisintervall 196 ausgegeben.

In einem weiteren, hier nicht dargestellten Ausführungsbeispiel wird der Ergebniswert 214 der Berechnungseinheit 36 mit dem Ergebnisintervall 198 der Berechnungseinheit 38 verglichen, um das Ergebnisintervall 198 zu validieren.

**Patentansprüche**

1. Verfahren zum Betreiben eines Sicherheitssteuergeräts (26, 82, 99), mit den Schritten:

   - Bereitstellen einer Anzahl von Berechnungseinheiten (36, 38),
   - Erfassen eines Eingangssignals (162),
   - Ermitteln eines Gleitkommawerts (166) in Abhängigkeit des Eingangssignals (162),

- Bestimmen eines Eingangsintervalls (172) in Abhängigkeit des Gleitkommawerts (166),
- Ermitteln einer Anzahl von Ergebnisintervallen (196, 198), wobei mittels der Berechnungseinheiten (36, 38) jeweils ein Ergebnisintervall (196, 198) ermittelt wird, und wobei die Berechnungseinheiten (36, 38) dazu ausgebildet sind, jeweils mindestens eine erste Rechenvorschrift (194) auf das Eingangsintervall (172) anzuwenden, die eine Intervallarithmetik aufweist,
- Bestimmen eines Ausgangswerts in Abhängigkeit der Ergebnisintervalle (196, 198), wenn ein Ausgabekriterium erfüllt ist,
- Bestimmen eines Ausgangssignals (208) in Abhängigkeit des Ausgangswerts, und
- Ausgeben des Ausgangssignals (208).

2. Verfahren nach Anspruch 1, **dadurch gekennzeichnet, dass** eine Berechnungsgenauigkeit mindestens einer der Berechnungseinheiten (36, 38) ermittelt wird.

3. Verfahren nach Anspruch 2, **dadurch gekennzeichnet, dass** eine Intervallbreite des Eingangsintervalls (172) in Abhängigkeit der Berechnungsgenauigkeit bestimmt wird.

4. Verfahren nach Anspruch 2 oder 3, **dadurch gekennzeichnet, dass** mindestens ein Reaktionsschritt (60) ausgeführt wird, wenn die Berechnungsgenauigkeit einen Schwellwert unterschreitet.

5. Verfahren nach einem der Ansprüche 1 bis 4, dadurch gekenntzeichnet, dass eine Ergebnisintervallbreite mindestens eines der Ergebnisintervalle (196, 198) ermittelt wird, wobei dann mindestens der eine Reaktionsschritt (60) ausgeführt wird, wenn die Ergebnisintervallbreite eine Maximalbreite überschreitet.

6. Verfahren nach einem der Ansprüche 1 bis 5, **dadurch gekennzeichnet, dass** die Ergebnisintervalle (196, 198) der Berechnungseinheiten (36, 38) phasisch auf eine Intervallüberlappung (204) überprüft werden, wobei dann der mindestens eine Reaktionsschritt (60) ausgeführt wird, wenn mindestens eines der Ergebnisintervalle (196, 198) außerhalb der weiteren Ergebnisintervalle (196, 198) liegt.

7. Verfahren nach einem der Ansprüche 4 bis 6, **dadurch gekennzeichnet, dass** mit mindestens einer Berechnungseinheit (36, 38) ein Ergebniswert (214) in Abhängigkeit des Gleitkommawerts (166) ermittelt wird, wobei jeweils mindestens eine weitere, zweite Rechenvorschrift (212) auf den Gleitkommawert (166) angewendet wird, die äquivalent zu einer der ersten Rechenvorschriften (194) ist.

8. Verfahren nach Anspruch 7, **dadurch gekennzeichnet, dass** der Ergebniswert (214) mit mindestens einem der Ergebnisintervalle (196, 198) verglichen wird, wobei dann der mindestens eine Reaktionsschritt (60) ausgeführt wird, wenn der Ergebniswert (214) außerhalb des Ergebnisintervalls (196, 198) liegt.

9. Verfahren nach einem der Ansprüche 4 bis 8, **dadurch gekennzeichnet, dass** der Reaktionsschritt das Verfahren in mindestens einer der Berechnungseinheiten (36, 38) anhält.

10. Verfahren nach einem der Ansprüche 4 bis 9, **dadurch gekennzeichnet, dass** der Reaktionsschritt (60) mindestens zwei der Berechnungseinheiten (36, 38) synchronisiert.

11. Verfahren nach einem der Ansprüche 1 bis 10, **dadurch gekennzeichnet, dass** das Eingangssignal (162) aus einem Daten-BUS (104) erfasst wird.

12. Verfahren nach einem der Ansprüche 1 bis 11, **dadurch gekennzeichnet, dass** das Ausgangssignal (208) an den Daten-BUS (104) ausgegeben wird.

13. Verfahren nach einem der Ansprüche 1 bis 12, **dadurch gekennzeichnet, dass**. mittels des Ausgangssignals (208) ein Aktor (62, 64, 94) für einen sicherheitsrelevanten Zustandsparameter einer Maschine (12, 76) gesteuert wird.

14. Verfahren nach einem der Ansprüche 1 bis 13, **dadurch gekennzeichnet, dass** als Eingangssignal (162) ein Sensorsignal eines Sensors (22, 78) erfasst wird, das den sicherheitsrelevanten Zustandsparameter der Maschine (12, 76) erfasst.

15. Verfahren nach einem der Ansprüche 1 bis 14, **dadurch gekennzeichnet, dass** ein Schaltsignal eines Not-Aus-Tasters (68) empfangen werden kann.

16. Sicherheitssteuergerät (26, 82, 99) mit einer Anzahl von Berechnungseinheiten (36, 38), das dazu ausgebildet ist, ein Eingangssignal (162) zu erfassen, einen Gleitkommawert (166) in Abhängigkeit des Eingangssignals (162) zu ermitteln, ein Eingangsintervall (172) in Abhängigkeit des Gleitkommawerts (166) zu bestimmen, eine Anzahl von Ergebnisintervallen (196, 198) zu ermitteln, wobei mittels der Berechnungseinheiten (36, 38) jeweils ein Ergebnisintervall (196, 198) ermittelt wird, und wobei die Berechnungseinheiten (36, 38) dazu ausgebildet sind, jeweils mindestens eine erste Rechenvorschrift (194) auf das Eingangsintervall (172) anzuwenden, die eine Intervallarithmetik aufweist, einen Ausgangswert in Abhängigkeit der Ergebnisintervalle (196, 198) zu bestimmen, wenn ein Ausgabekriterium erfüllt ist, ein Ausgangssignal (208) in Abhängigkeit des Ausgangswerts zu bestimmen, und das Ausgangssignal (208) auszugeben.

**Claims**

1. A method for operating a safety control device (26, 82, 99), comprising the steps of

   - providing a number of calculation units (36, 38),
   - acquiring an input signal (162),
   - determining a floating point value (166) depending on the input signal (162),
   - determining an input interval (172) depending on the floating point value (166),
   - determining a number of result intervals (196, 198), wherein the calculation units (36, 38) each determine one result interval (196, 198), and wherein the calculation units (36, 38) each are designed to apply at least a first calculation algorithm (194) to the input interval (172), said first calculation algorithm comprising an interval arithmetic
   - determining an output value depending on the result intervals (196, 198) if an output criterion is satisfied,
   - determining an output signal (208) depending on the output value, and
   - outputting the output signal (208).

2. The method of claim 1, **characterized in that** a calculation precision of at least one of the calculation units (36, 38) is determined.

3. The method of claim 2, **characterized in that** an interval width of the input interval (172) is determined depending on the calculation precision.

4. The method of claim 2 or 3, **characterized in that** at least one reaction step (60) is carried out if the calculation precision falls below a threshold value.

5. The method of one of claims 1 to 4, **characterized in that** a result interval width of at least one of the result intervals (196, 198) is determined, wherein the at least one reaction step (60) is carried out if the result interval width exceeds a maximum width.

6. The method of one of claims 1 to 5, **characterized in that** the result intervals (196, 198) of the calculation units (36, 38) are checked for interval overlap (204) from time to time, wherein the at least one reaction step (60) is carried out if at least one of the result intervals (196, 198) lies outside the further result intervals (196, 198).

7. The method of one of claims 4 to 6, **characterized in that** a result value (214) is determined depending on the floating point value (166) by using at least one calculation unit (36, 38), wherein at least one further, second calculation algorithm (212) that is equivalent to one of the first calculation algorithms (194) is applied to the floating point value (166) in each case.

8. The method of claim 7, **characterized in that** the result value (214) is compared with at least one of the result intervals (196, 198), wherein the at least one reaction step (60) is carried out if the result value (214) lies outside the result interval (196, 198).

9. The method of one of claims 4 to 8, **characterized in that** the reaction step halts the process in at least one of the calculation units (36, 38).

**10.** The method of one of claims 4 to 9, **characterized in that** the reaction step (60) synchronizes at least two of the calculation units (36, 38).

**11.** The method of one of claims 1 to 10, **characterized in that** the input signal (162) is acquired from a data bus (104).

**12.** The method of one of claims 1 to 11, **characterized in that** the output signal (208) is output on the data bus (104).

**13.** The method of one of claims 1 to 12, **characterized in that** an actuator (62, 64, 94) for a safety-relevant state parameter of a machine (12, 76) is controlled by means of the output signal (208).

**14.** The method of one of claims 1 to 13, **characterized in that** a sensor signal of a sensor (22, 78) that acquires the safety-relevant state parameter of the machine (12, 76) is acquired as an input signal (162).

**15.** The method of one of claims 1 to 14, **characterized in that** a switching signal from an emergency-off button (68) can be received.

**16.** A safety control device (26, 82, 99) comprising a number of calculation units (36, 38), said control device being designed to acquire an input signal (162), to determine a floating point value (166) depending on the input signal (162), to determine an input interval (172) depending on the floating point value (166), to determine a number of result intervals (196, 198), wherein a result interval (196, 198) is determined by means of each of the calculation units (36, 38), and wherein the calculation units (36, 38) each are designed to apply at least a first calculation algorithm (194) that comprises an interval arithmetic to the input interval (172), to determine an output value depending on the result intervals (196, 198) if an output criterion is satisfied, to determine an output signal (208) depending on the output value, and to output the output signal (208).

**Revendications**

**1.** Procédé pour faire fonctionner un contrôleur de sécurité (26, 82, 99), comprenant les étapes suivantes :

> - mise à disposition d'un certain nombre d'unités de calcul (36, 38),
> - détection d'un signal d'entrée (162),
> - détermination d'une valeur à virgule flottante (166) en fonction du signal d'entrée (162),
> - détermination d'un intervalle d'entrée (172) en fonction de la valeur à virgule flottante (166),
> - détermination d'un certain nombre d'intervalles de résultat (196, 198), un intervalle de résultat (196, 198) étant à chaque fois déterminé au moyen des unités de calcul (36, 38), et les unités de calcul (36, 38) étant configurées pour appliquer à l'intervalle d'entrée (172) à chaque fois au moins une première règle de calcul (194) qui présente une arithmétique d'intervalle,
> - détermination d'une valeur de sortie en fonction de l'intervalle de résultat (196, 198) lorsqu'un critère de sortie est rempli,
> - détermination d'un signal de sortie (208) en fonction de la valeur de sortie, et
> - délivrance du signal de sortie (208).

**2.** Procédé selon la revendication 1, **caractérisé en ce qu'**une précision de calcul d'au moins l'une des unités de calcul (36, 38) est déterminée.

**3.** Procédé selon la revendication 2, **caractérisé en ce qu'**une largeur d'intervalle de l'intervalle d'entrée (172) est déterminée en fonction de la précision de calcul.

**4.** Procédé selon la revendication 2 ou 3, **caractérisé en ce qu'**au moins une étape de réaction (60) est exécutée lorsque la précision de calcul devient inférieure à une valeur de seuil.

**5.** Procédé selon l'une des revendications 1 à 4, **caractérisé en ce qu'**une largeur d'intervalle de résultat d'au moins l'un des intervalles de résultat (196, 198) est déterminée, au moins ladite étape de réaction (60) étant alors exécutée si la largeur d'intervalle de résultat est supérieure à une largeur maximale.

**6.** Procédé selon l'une des revendications 1 à 5, **caractérisé en ce que** les intervalles de résultat (196, 198) des unités de calcul (36, 38) sont soumis à un contrôle afin de vérifier s'il se produit un chevauchement d'intervalles (204) du point de vue de la phase, l'au moins une étape de réaction (60) étant alors exécutée si au moins l'un des intervalles de résultat (196, 198) se trouve en dehors des autres intervalles de résultat (196, 198),

7. Procédé selon l'une des revendications 4 à 6, **caractérisé en ce qu'**une valeur de résultat (214) est déterminée avec au moins une unité de calcul (36, 38) en fonction de la valeur à virgule flottante (166), au moins une deuxième étape de calcul (212) supplémentaire étant à chaque fois appliquée à la valeur à virgule flottante (166), laquelle est équivalente à l'une des premières étapes de calcul (194).

8. Procédé selon la revendication 7, **caractérisé en ce que** la valeur de résultat (214) est comparée avec au moins l'un des intervalles de résultat (196, 198), l'au moins une étape de réaction (60) étant alors exécutée si la valeur de résultat (214) se trouve en dehors de l'intervalle de résultat (196, 198).

9. Procédé selon l'une des revendications 4 à 8, **caractérisé en ce que** l'étape de réaction interrompt le procédé dans au moins l'une des unités de calcul (36, 38).

10. Procédé selon l'une des revendications 4 à 9, **caractérisé en ce que** l'étape de réaction (60) synchronise au moins deux des unités de calcul (36, 38).

11. Procédé selon l'une des revendications 1 à 10, **caractérisé en ce que** le signal d'entrée (162) est détecté à partir d'un bus de données (104).

12. Procédé selon l'une des revendications 1 à 11, **caractérisé en ce que** le signal de sortie (208) est délivré sur le bus de données (104).

13. Procédé selon l'une des revendications 1 à 12, **caractérisé en ce qu'**un actionneur (62, 64, 94) pour un paramètre d'état d'une machine (12, 76), en rapport avec la sécurité, est commandé au moyen du signal de sortie (208).

14. Procédé selon l'une des revendications 1 à 13, **caractérisé en ce que** le signal d'entrée (162) détecté est un signal de détection d'un capteur (22, 78) qui détecte le paramètre d'état de la machine (12, 76), en rapport avec la sécurité.

15. Procédé selon l'une des revendications 1 à 14, **caractérisé en ce qu'**un signal toutou-rien d'un poussoir d'arrêt d'urgence (68) peut être reçu.

16. Contrôleur de sécurité (26, 82, 99), comprenant un certain nombre d'unités de calcul (36, 38), qui est configuré pour détecter un signal d'entrée (162), pour déterminer une valeur à virgule flottante (166) en fonction du signal d'entrée (162), pour déterminer un intervalle d'entrée (172) en fonction de la valeur à virgule flottante (166), pour déterminer un certain nombre d'intervalles de résultat (196, 198), un intervalle de résultat (196, 198) étant à chaque fois déterminé au moyen des unités de calcul (36, 38), et les unités de calcul (36, 38) étant configurées pour appliquer à l'intervalle d'entrée (172) à chaque fois au moins une première règle de calcul (194) qui présente une arithmétique d'intervalle, pour déterminer une valeur de sortie en fonction de l'intervalle de résultat (196, 198) lorsqu'un critère de sortie est rempli, pour déterminer un signal de sortie (208) en fonction de la valeur de sortie, et pour délivrer le signal de sortie (208).

Fig.1

Fig.2

Fig.3

105

Empfangen Eingangssignal — 106

Ermitteln Eingangswert — 108

Bestimmen Eingangsintervall — 110

60

112 — Ermitteln Ergebnisintervall I ⟷ Ermitteln Ergebnisintervall II — 114

Intervallüberlappung — 116

130

Bestimmung Ersatzwert

118

128

132

Not-Aus Signal — 134

Ausgabekriterium erfüllt — 120

136

Bestimmen Ausgangswert — 122

Bestimmen Ausgangssignal — 124

Ausgeben Ausgangssignal — 126

Fig.4

Fig.5

Ermitteln Eingangswert — 108

Bestimmen Eingangsintervall — 110

150 — Ermitteln Ergebniswert I

112 — Ermitteln Ergebnisintervall I

60

114 — Ermitteln Ergebnisintervall II

152 — Ermitteln Ergebniswert II

154 — Vergleich mit Ergebnisintervall II

Bestimmung Ersatzwert — 146

156 — Vergleich mit Ergebnisintervall I

158

Intervallüberlappung — 116

118

120 — Ausgabekriterium erfüllt

# Fig.6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• EP 1591849 A1

**In der Beschreibung aufgeführte Nicht-Patentliteratur**

• **COMBA, JOAO L. D. ; STOLFI, JORGE.** Affine Arithmetic and Its Applications to Computer Graphics. *Proc. SIBGRAPI '93, VI Brazilian Symposium on Computer Graphics and Image Processing,* 1993
• **DE FIGUEIREDO ; LUIZ HENRIQUE ; STOLFI; JORGE.** Self-Validated Numerical Methods and Applications. *Brazilian Mathematics Colloquium Monograph, IMPA, Rio de Janeiro, Brazil,* 1997
• **HANSEN, ELDON R.** A Generalized Interval Arithmetic. *Proc. International Symposium on Interval Mathematics, London,* 1975
• **NEUMAIER, ARNOLD.** Taylor Forms - Use and Limits. *Reliable Computing,* 2002, vol. 9
• **SENGUPTA, ATANU ; PAL, TAPAN KUMAR.** Theory and Methodology: On comparing interval numbers. *European Journal of Operational Research,* 2000, vol. 127
• **YOUNG, ROSALIND CECILY.** The Algebra of Many-Valued Quantities. *Mathematische Annalen,* 1931, vol. 4 (1